# EUROPEAN PATENT APPLICATION

(11) **EP 2 154 612 A2**
(43) Date of publication of application: **17.02.2010**
(21) Application number: 09162335.5
(22) Date of filing: 09.06.2009
(51) Int. Cl.: G06F 11/36

(54) **Message logging for software applications**

(30) Priority: 13.08.2008 US 190838
(71) Applicant: Honeywell International Inc., Morristown, NJ 07962 (US)
(72) Inventor: Schneider, Eric R., Morristown NJ 07962-2245 (US); Kikta, Timothy J., Morristown NJ 07962-2245 (US)
(74) Representative: Buckley, Guy Julian

(57) **Abstract**

A computer system comprises a storage medium configured to store software instructions; a processing unit configured to execute the software instructions; a bus; and an acknowledge device coupled to the processing unit via the bus. The processing unit is further configured to periodically write debug messages to the acknowledge device during execution of the software instructions and the acknowledge device is configured to acknowledge the debug messages prior to processing the debug messages.

## Description

### GOVERNMENT LICENSE RIGHTS

The U.S. Government may have certain rights in the present invention as provided for by the terms of contracts N00030-05-C-0007 (Prime) and SC001-0000000145 (sub-contract) awarded by the United States Navy.

### BACKGROUND

Debugging complex software in real-time on real hardware is often not possible without tools that operate in real-time. Typical software and In-Circuit-Emulator (ICE) debuggers halt execution. Feedback control, communications and other applications fail due to loss of control, time-outs or other time related issues when execution is halted.

Some tools operate in real-time but are difficult to use. Logic analyzers are used to capture data; however, reconstructing a clear picture of CPU execution is often difficult. One reason for this is that logic analyzers typically monitor main memory access yet CPU instruction and data cache avoid main memory access to improve performance. Additionally, the low level bus cycles, even when translated to high level source code, are often difficult to navigate when hunting for software bugs.

Many high end internet equipment applications such as core and edge routers as well as more mundane applications perform message logging to various devices. This is done to output high level debug information that is typically categorized into FATAL, ERROR, WARNING, and INFORMATION. Although the category names change their intuitive meaning is the same from application to application. This allows developers and operators to check the status of the system and troubleshoot operation. An example of this is the Windows XP ™ Administrative Tool "Event Viewer".

There is a significant performance cost of message logging when processing large amounts of information in high performance or low cost applications. The cost is associated with: the invocation of the logging function itself, the overhead of message data formatting and data transfer, the output device driver and operating system overhead, and the reduction in CPU cache use for the actual application. One means of reducing driver and operating system overhead in a conventional system is to store data into main memory (RAM), however this limits the amount of data logging. One means of reducing formatting overhead in a conventional system is to perform the formatting in a low priority task which runs when the application is waiting for data to process.

### SUMMARY

The above mentioned problems and other problems are resolved by the present invention and will be understood by reading and studying the following specification.

In one embodiment, a computer system is provided. The computer system comprises a storage medium configured to store software instructions; a processing unit configured to execute the software instructions; a bus; and an acknowledge device coupled to the processing unit via the bus. The processing unit is further configured to periodically write debug messages to the acknowledge device during execution of the software instructions and the acknowledge device is configured to acknowledge the debug messages prior to processing the debug messages.

### DRAWINGS

Features of the present invention will become apparent to those skilled in the art from the following description with reference to the drawings. Understanding that the drawings depict only typical embodiments of the invention and are not therefore to be considered limiting in scope, the invention will be described with additional specificity and detail through the use of the accompanying drawings, in which:

Figures 1A-1C are block diagrams of a system used for message logging according to one embodiment of the present invention.

Figure 2 is a timing diagram for the transmission of debug messages according to one embodiment of the present invention.

Figure 3 is a flow chart depicting a method of message logging according to one embodiment of the present invention.

Figure 4 is a flow chart depicting a method of generating message logs in human readable format according to one embodiment of the present invention.

In accordance with common practice, the various described features are not drawn to scale but are drawn to emphasize specific features relevant to the present invention. Like reference numbers and designations in the various drawings indicate like elements.

### DETAILED DESCRIPTION

In the following detailed description, embodiments are described in sufficient detail to enable those skilled in the art to practice the present invention. It is to be understood that other embodiments may be utilized without departing from the scope of the present invention. For example, the following description describes embodiments of the present invention with relation to PowerPC architecture. However, it is to be understood that embodiments of the present invention are not to be limited to PowerPC architectures. The following detailed description is, therefore, not to be taken in a limiting sense.

Embodiments of the present invention provide a low overhead message logging mechanism to assist in debugging real-time systems. In particular, embodiments of the present invention enable faster transmission and logging of debug messages by reducing the wait time for a processing unit to receive acknowledgment of receipt of debugging messages. Embodiments of the present invention also enable output of error messages in a human readable format.

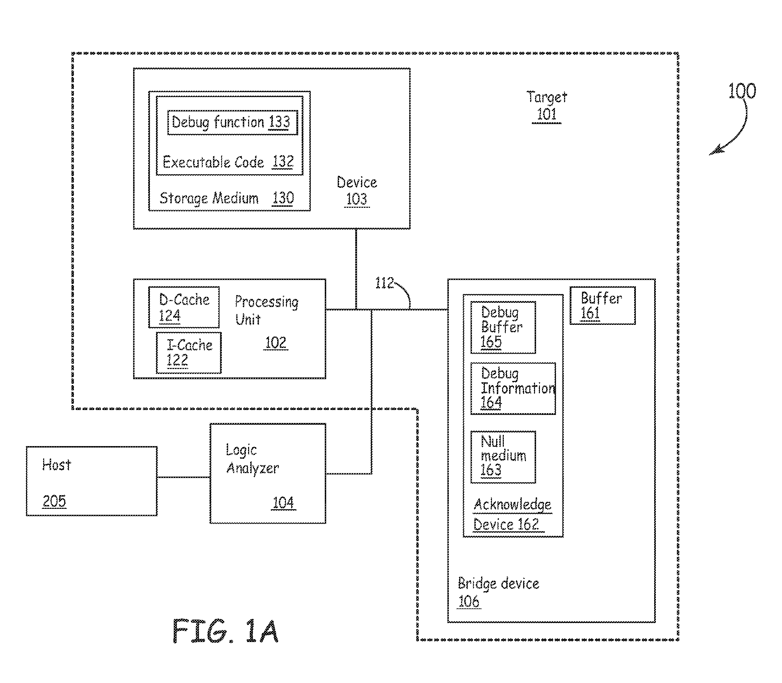

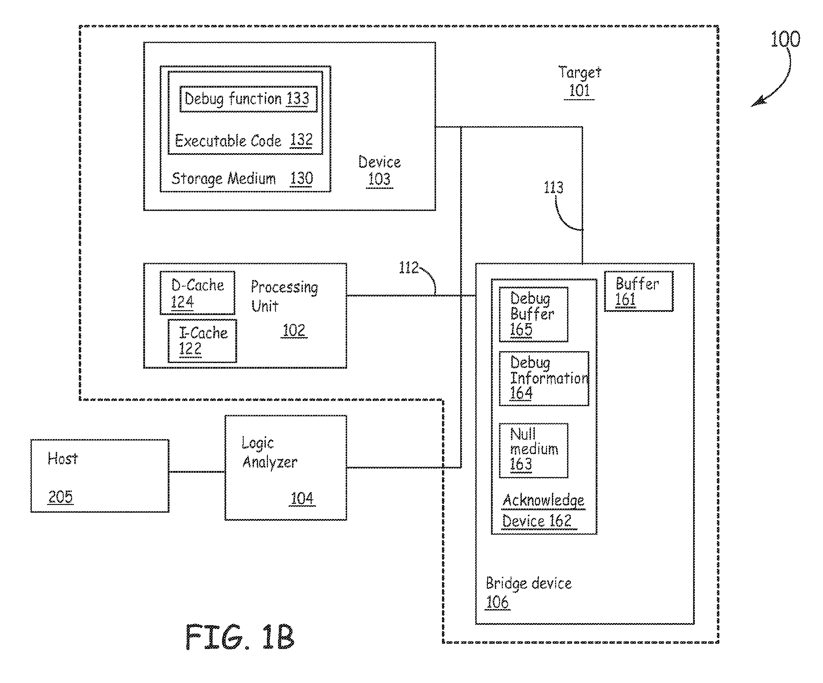

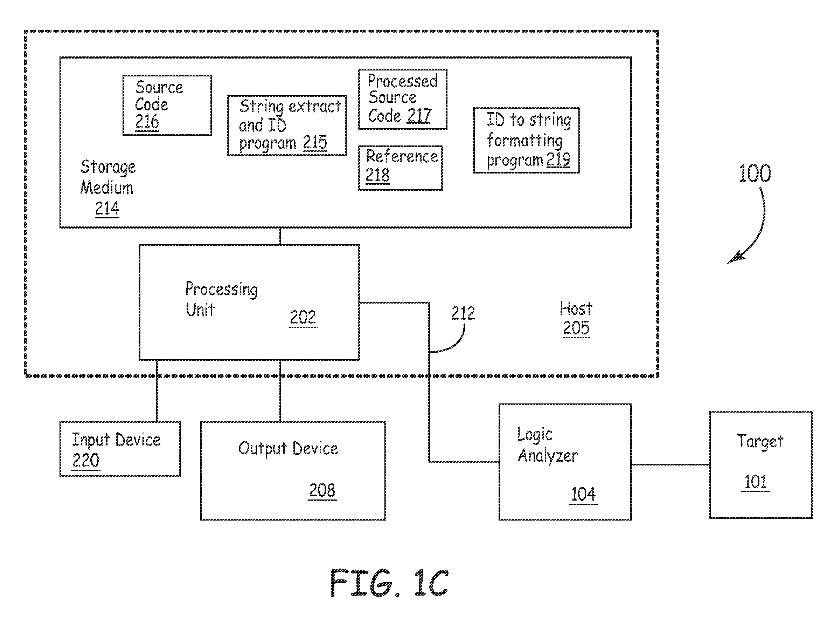

Figure 1 is a block diagram of a system 100 used for logging debug messages according to one embodiment of the present invention. System 100 includes a target computer system 101, a host computer system 205 and a logic analyzer 104. Target computer 101 is a computer system which is being tested or debugged. Logic analyzer 104 is used in capturing debug data from target computer 101 and host computer 205 is a computer system which processes the debug data captured by logic analyzer. Target computer 101 includes a processing unit 102 which is configured to process executable code 132 on storage medium 130. Storage medium 130 is implemented as any appropriate computer readable medium used for storage of computer readable instructions or data structures. Such computer media can be any available media that can be accessed by a general purpose or special purpose computer or processor, or any programmable logic device. Suitable computer readable media may comprise, for example, non-volatile memory devices including semiconductor memory devices such as EPROM, EEPROM, or flash memory devices; magnetic disks such as internal hard disks or removable disks (e.g., floppy disks); magneto-optical disks; CDs, DVDs, or other optical storage disks; nonvolatile ROM, RAM, and other like media.

Processing unit 102 accesses device 103 through processor interface 112. Suitable devices include, but are not limited to, communications devices, input and output devices, digital-to-analog or analog-to-digital converters, and storage medium 130. Each time an access occurs, processing unit 102 receives an indication it can perform another transfer. Waiting for the ability to perform another transfer slows processing. This wait time varies depending on the speed of device 103 accessed. In general, for the same kind of device 103, faster devices with shorter wait times cost more than relatively slower devices with longer wait times.

Processing unit 102 includes fast access instruction cache (I-cache) 122 and data cache (D-cache) 124. Processing unit 102 can access processor interface 112 by way of these caches to improve the overall speed of accesses. For example, information accessed on storage medium 130 is copied to I-cache 122 and D-cache 124 using techniques known to one of ordinary skill in the art. In particular, I-cache 122 is responsible for caching instructions and D-cache 124 is responsible for caching data. Future accesses to the same information can use the cache copies rather than go out on processor interface 112. Each of I-cache 122 and D-cache 124 use a plurality of cache lines of fixed size. For example, in the PowerPC 603E architecture, each of I-cache 122 and D-cache 124 are 16 KB in size with each of 512 cache lines being a fixed 32 bytes. Using a separate cache for instructions and data enables concurrent access of instructions and data. However, embodiments of the present invention are not to be limited to separate caches for instruction and data. In addition, processing unit 102 may include other components known to one of skill in the art, such as a Memory Management Unit which is responsible for address translation between virtual and physical addresses.

Target computer 101 includes bridge device 106 to bridge different interface protocols between processing unit 102 and a plurality of devices 103 such as storage medium 130. Processing unit 102 accesses device 103 in one of three ways depending on the protocol requirements of processing unit 102 and device 103. In the exemplary embodiment shown in Fig. 1A, processing unit 102 accesses device 103 across processor interface 112 directly. However, in the exemplary embodiment shown in Fig. 1B, processing unit 102 accesses device 103 across bridge device interface 113. In other embodiments, processing unit 102 accesses device 103 across processor interface 112 with the assistance of bridge device 106. Bridge device 106 is used to connect to a plurality of different kinds of devices 103 including a plurality of different kinds of storage medium 130 in target computer 101. In addition, bridge device 106 is used to, in some embodiments, to bridge a plurality of different devices 103 across a plurality of different bridge interfaces 113 (shown in Fig. 1B).

Bridge device 106 may include a plurality of buffers 161 to buffer access to various instances of device 103 similar to D-cache 124. For example, in some embodiments, bridge device 106 supports a DRAM buffer which allows processing unit 102 to post a write to DRAM and receive a faster acknowledge while bridge device 106 proxies the write to DRAM at a slower rate.

The present invention also includes null medium 163 to provide a fast acknowledge to processing unit 102 without acting as proxy to any device 103. Null medium 163 uses debug information 164 to identify requests from processing unit 102 to the null medium 163. Null medium 163 and debug information 164 are implemented as any appropriate high-speed memory device. For example, null medium 163 and debug information 164 can be implemented as an application specific integrated circuit (ASIC) or a field-programmable gate array (FPGA). In this embodiment, null medium 163 and debug information 164 are coupled to processing unit 102 via bus 112 such as a processor local bus (PLB). In addition, in this embodiment, null medium 163 and debug information 164 are part of bridge device 106. However, in other embodiments, null medium 163 and debug information 164 can be part of processing unit 102, separate device 103 or part of any component which allows processing unit 102 to perform a write access across a bus accessible to logic analyzer 104.

In this exemplary embodiment of the present invention, acknowledge device 162 also includes debug buffer 165 to provide a fast acknowledge to processing unit 102 while acting as proxy to device 103. Debug buffer 165 performs a similar function as a buffer in a conventional system. However, debug buffer 165 uses debug information 164 to identify requests from processing unit 102 on bus 112 to debug buffer 165 and to identify device 103 transactions required for bus 113. Debug buffer 165 is used for processing unit 102 writes to storage medium 130 to allow a simpler design than conventional DRAM buffers. One example of this simpler design is the lack of cache coherency logic as used in conventional systems. Specifically, cache coherency logic is not required in this exemplary embodiment because processing unit 102 on bus 112 does not need to know about any other processing unit's debug data. Embodiments of the present invention are not to be limited to buffering for DRAM, but may buffer for any device to which a processing unit may write, such as storage devices, communications devices, or other output devices such as displays.

Although acknowledge device 162 in this exemplary embodiment includes null medium 163, debug information 164, and debug buffer 165, in other embodiments, acknowledge device 162 can consist of any combination of any number of null medium 163 and/or debug buffer 165 along with debug information 164 needed for such combination.

Invocations of debug function 133 are interspersed throughout executable code 132 and called as processing unit 102 executes code 132. During execution of debug function 133 processing unit 102 writes debug data to acknowledge device 162. In some embodiments, debug data (including debug function 133 argument values) contains information typically used in conventional systems, such as information which is categorized into FATAL, ERROR, WARNING, and INFORMATION. In other embodiments, the debug data also contains additional information which is not typically included in conventional systems such as subroutine entry and exit, subroutine arguments, intermediate calculation results, and processing deadline margins.

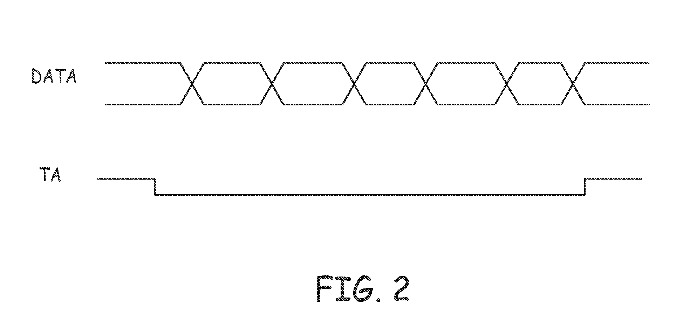

Processing unit 102 must wait for an acknowledgment from bridge device 106 prior to sending more data. In conventional systems, a bridge device holds off acknowledgement of the write until the bridge device can accept and acknowledge receipt of the data. However, in embodiments of the present invention, acknowledge device 162 acknowledges writes immediately. In particular, in some embodiments, such as those which implement null medium 163, the data is simply acknowledged and dropped. This quick acknowledgment enables processing unit 102 to process debug data faster than normal data. As shown in the exemplary timing diagram in Fig. 2, the acknowledge line (TA) is essentially held low, in this embodiment, for the duration of the burst of debug message data on the data line allowing processing unit 102 to send one bus-width of data after another.

In some embodiments, logic analyzer 104 is coupled to interface 112. Thus, even if debug data is dropped by acknowledge device 162 in some embodiments, logic analyzer 104 is able to sample and store the debug data. Hence, when debug data is written to acknowledge device 162, logic analyzer 104 records and processes the data. In particular, logic analyzer 104 adds a timestamp to each debug message. Since processing unit 102 is able to burst data to acknowledge device 162, logic analyzer 104 is able to log the debug message data at high speed compared to conventional systems. Therefore, embodiments of the present invention are able to provide real-time logging of debug data without the time delays and associated costs to the performance of processing unit 102 found in conventional systems.

Alternatively, logic analyzer 104 is coupled to interface 113, as shown in Fig. 1B, to capture debug data forwarded from debug buffer 165. In some embodiments, device 103 does not exist on interface 113 coupled by logic analyzer 104. For example, if device 103 is a serial port chip, logic analyzer 104, in some embodiments, observes the same data on interface 113 even when device 103 is removed. In other embodiments, interface 113 is only used to provide a debug interface for logic analyzer 104. Furthermore, in some embodiments, it is not desirable to drop the debug data. In one such embodiment, debug buffer 165 is coupled to device 103. Thus, in addition to acknowledging debug data immediately, acknowledge device 162 forwards the debug data to device 103 over bus 113. Logic analyzer 104 is be coupled to bus 113 to capture debug data as it is forwarded to device 103. In some such embodiments, device 103 acts as the only capture device for debug data. For example, if device 103 is a disk drive controller, it can capture and record the data directly to disk, in some embodiments.

One exemplary function used to write the debug data to acknowledge device 162 is: writeDebugMsgl (addr, ID, x, y, z). In one embodiment this debug function uses only one cache line of I-cache 122 to write one cache line of data from D-cache 124 to acknowledge device 162. Inside the parentheses are the arguments used by the debug function. In particular, "addr" is the address of acknowledge device 162 to which the data is written. The arguments "ID, x, y and z" represent the values or arguments used by the function from code 132 and are the primary components of the debug data. The meaning and values of ID,x,y,z vary based on the particular application or implementation. Nominally, ID is a unique number which identifies a specific parameterization of a writeDebugMsgl() invocation.

Debug function arguments, like x, y, and z, can be implemented as different data types. For example, in some embodiments, x, y and z are float variables. In other embodiments, x, y, and z are integer variables. Notably, although arguments, x, y, and z, are used in this example, embodiments of the present invention are not to be so limited. In addition, the debug function may include fewer or additional arguments in other embodiments. For example, in some embodiments, the debug function also includes an argument "flags". This additional argument indicates the importance or severity of the current debug message. Examples of conventional flags already mentioned are FATAL, ERROR, WARNING, etc.

In other embodiments, the debug function does not use the address argument. One such exemplary debug function is: writeDebugMsg2 (ID, x, y, z). This debug function always writes to a predefined cache address. Consequently, this second exemplary debug function places less burden on the function caller. However, the cache footprint for the second debug function may be greater than the cache footprint for the first exemplary debug function. In one embodiment for the PowerPC architecture the second debug function uses one or more I-cache 122 cache lines due to the additional need to identify the address to which to write.

Since the debug function is executed frequently when executing code 132, it is typically located in I-cache 122. This is because I-cache 122 replaces cache lines using a least-recently used (LRU) replacement policy. Therefore, executing the debug function frequently typically maintains the debug function in I-cache 122. Running the debug function from I-cache 122 significantly improves performance. For example, in one embodiment, the average time for a write to acknowledge device 162, across a 4 byte bus using the debug function from I-cache 122, is roughly 175 bus clocks compared to roughly 250-500 bus clocks when not running the debug function from I-cache 122. For example, in another embodiment, with an 800MHz x 64-bit front side bus (i.e. 112), 87 clocks equate to less than 110 ns per debug function invocation. Executable code 132 repeating a task at a 100 Hz rate could have 250 debug function invocations per task cycle and still only use 0.25% of processing time for executable code 132.

Embodiments of the present invention also enable formatting the raw data written to logic analyzer 104 into a human readable message. In this exemplary embodiment, the formatting is performed by host 205. This offloads processing from processing unit 102 in target 101 to processing unit 202 in host 205 for the formatting and display of print functions. In particular, the unique number (ID) passed to debug function 133 is used to correlate format strings with the data captured by logic analyzer 104. For example, format strings include the text of messages associated with a print() function or other similar output to a user.

Processing unit 202 executes program 215 which locates and extracts human readable format strings from print functions from source code 216. Source code 216 is the source code for executable code 132 executed by processing unit 102. Processing unit 202 saves each extracted format string and a unique correlating index number in a reference file 218. Nominally processing unit 202 ensures that each index number is unique as the format strings and index numbers are extracted. If the index number is not unique, processing unit 202 generates a unique number in some embodiments. Alternatively, processing unit 202 generates a unique number for each function rather than using the index numbers from source code 232 to ensure that each number is unique. Although reference file 218 is shown as being stored on storage medium 214, it is to be understood that reference file 218 can be stored on a separate appropriate storage medium such as flash memory devices; magnetic disks such as internal hard disks or removable disks (e.g., floppy disks); magneto-optical disks; CDs, DVDs, or other optical storage disks; RAM, and other like media.

Source code 216 is updated with the unique ID inserted into the print function to generate processed source code 217. For example, in the print statement below, the ID argument, 0 in this example, which is the first argument to the print statement, is replaced by the unique ID.

Print(0,"%d] meaningless error message on interface %d with data %d\n,interface,data);

In the present invention, processing unit 202 additionally saves processed source code 217 where calls to the print function are replaced by calls to debug function 133 (e.g. writeDebugMsgl) with the ID argument corresponding to the print function's string as saved in reference file 218. Although processed source code 217 is shown as a separate file it may alternatively be a temporary generated file as part of a conversion process from source code 216 to executable code 132 similar to how a C compiler may pre-process source code while generating executable images.

In some embodiments of the present invention, the index number associated with each extracted format string is used solely as the identification number for the format string. When processing unit 102 executes debug function 133 it passes the unique ID number of the format string and the arguments to be formatted to acknowledge device 162. Logic analyzer 104 captures the ID and argument values and, in some embodiments, logs the captured ID and argument values with a time stamp. Alternatively, device 103 is configured, in some embodiments, to capture the ID and argument values.

Processing unit 202 executes ID to string formatting program 219 to reconstruct a human readable message using the format string from reference file 218 and trace data stored by logic analyzer 104. From logic analyzer 104 trace data, processing unit 202 obtains a timestamp and sequence number added by logic analyzer 104 as well as the values captured by logic analyzer 104 such as the ID and arguments x, y, and z. Processing unit 202 obtains the format string from reference file 218. Processing unit 202 formats the logic analyzer data using the format string and outputs the result to output device 208. Output device 208 can be implemented as a display element, printer, removable disk drive, etc. The following example illustrates the transformation of a format string to a set of numbers and its reconstruction to human readable format. It is to be understood that the example provided below is merely illustrative and embodiments of the present invention are not to be limited by this example. In this example, the human readable format string in source code 216 is:

printf("The gimbals' angles are: (%g, %g, %g)\n", f1, f2, f3);

In the above print statement, the variables f1, f2, and f3 are float type variables. Processing unit 202 finds this statement in source code 216 and saves it in reference file 218 with the index number from source code 216. An exemplary segment of reference file 218 is shown below:

| | |
|---|---|
| 1 | "Current transpose of the matrix is: %g, %g, %g" |
| 2 | "void dispatcher (void)" |
| ... | |
| 135 | "The gimbals' angles are: %g, %g, %g" |
| ... | |

The segment of reference file 218 above shows an array of human readable format strings. Each string has a unique identification number in the array. Processing unit 102 then executes code 132 and a debug function, such as writeDebugMsgl(addr, ID, x, y, z) described above, to debug source code 132. In this example, the value of addr is 0x50C00020, the value of ID is 135, and the values of x, y and z are 1.0, 2.0 and 3.0 respectively. In this embodiment, the address 0x50C00020 corresponds to the address range of acknowledge device 162. The logic analyzer trace of this debug message appears as follows:

| | | | | |
|---|---|---|---|---|
| 0x50C00020: | 05000135 | 00000000 | 11111111 | 11111111 |
| | 22222222 | 22222222 | 33333333 | 33333333 |

As can be seen, the example print statement has been reduced to just four float numbers in the logic analyzer trace above (which are notated as 11111111 11111111 for 1.0 etc). In addition, the logic analyzer trace includes the argument values of the print statement. Processing unit 202 then executes ID to string formatting program 219 to reconstruct the example string in a human readable format based on logic analyzer 104 captured data. In some embodiments, processing unit 202 reconstructs the format string when indicated by user input via user input device 220. User input device 220 can be implemented as a mouse, touch screen, keyboard, etc. In other embodiments, processing unit 202 automatically reconstructs the format string from the logic analyzer trace. Alternatively, processing unit 202 outputs the logic analyzer trace along with the reconstructed format string upon occurrence of a particular event, such as detection of an error or completion of execution of executable code 132.

A segment of an exemplary output of the logic analyzer trace with the reconstructed format string is shown below:

| | | | |
|---|---|---|---|
| 5402) | 3.20:111.40 | 135 | The gimbals' angles are: (1.0, 2.0, 3.0) |
| 5403) | 3.20:111.42 | 573 | The ... |

As can be seen, the output includes a sequence number (e.g. 5402) and time stamp (e.g. 3.20:111.40) obtained from logic analyzer 104. The output also includes the message ID and the human readable format string obtained from reference file 118. The values of f1, f2, and f3 are also included. Notably, the logic analyzer trace may include additional information. For example, in some embodiments, the logic analyzer trace also includes a user category ID obtained from logic analyzer 104 based on the address to which it is written (e.g. 0x50C00020). The category is displayed in a human readable format based on user categories used for filtering obtained from reference file 118. The logic analyzer trace output provides a more user friendly description of the functions and the attribute values used at that time. Hence, a user is able to more quickly interpret the logic analyzer trace and debug problems in source code 132.

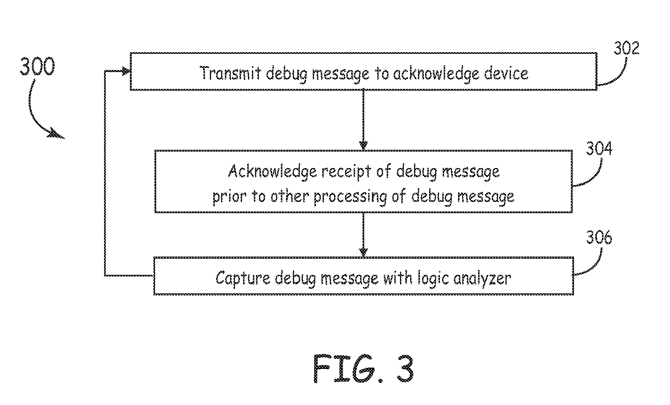

Figure 3 is a flow chart showing a method 300 of message logging according to one embodiment of the present invention. Method 300 can be implemented in a system such as system 100 described above. At 302, a processing unit (e.g. processing unit 102) transmits a first data signal (e.g., a debug message) to an acknowledge device (e.g., acknowledge device 162) via a bus (e.g., bus 112). When the acknowledge device receives the first data signal, it acknowledges receipt of the first data signal prior to other processing of the first data signal at 304. In particular, in some embodiments, the acknowledge device drops the first data signal after acknowledging receipt. In other embodiments, the acknowledge device forwards the data signal to a separate memory (e.g., storage medium 130) after acknowledging receipt of the first data signal. At 306, a logic analyzer (e.g, logic analyzer 104) captures the first data signal on the bus. Method 300 then returns to 302 where a second data signal is transmitted to the acknowledge device. In particular, the processing unit bursts the second and subsequent data signals to the acknowledge device as described above.

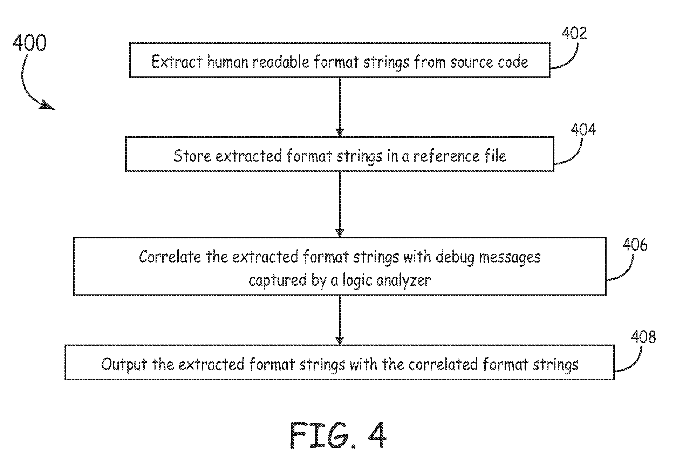

Figure 4 is a flow chart showing a method 400 of reconstructing human readable format strings in a logic analyzer trace according to one embodiment of the present invention. Method 400 can be implemented in software instructions tangibly embodied on a computer readable medium and executed by a processing unit such as processing unit 102. Such computer readable media can be any available media that can be accessed by a general purpose or special purpose computer or processor, or any programmable logic device. Suitable computer readable media may include storage or memory media such as magnetic or optical media, e.g., disk or CD-ROM, volatile or non-volatile media such as RAM (e.g. SDRAM, DDR SDRAM, RDRAM, SRAM, etc.), ROM, EEPROM, flash memory, etc. as well as transmission media such as electrical, electromagnetic, or digital signals, conveyed via a communication medium such as a network and/or a wireless link.

At 402, the processing unit extracts human readable format strings from source code (e.g. source code 132). In some embodiments, the processing unit also extracts an index number from the source code associated with each human readable format string. At 404, the processing unit stores the human readable format strings in a reference file (e.g. reference file 118). The human readable format strings are stored in an array with a unique identification number (also referred to as a message ID). In some embodiments, the unique identification number is the index number from the source code. The processing unit ensures that the identification number is unique and generates a unique number if the index number from source code is not unique.

At 406, the processing unit correlates the extracted human readable format strings with logic analyzer traces obtained from a debug function during execution of the source code. The extracted human readable format strings are correlated with the logic analyzer traces based on the unique identification number as described above. At 408, the processing unit outputs the logic analyzer trace values in human readable format using the human readable format strings from the reference file. In some embodiments, the processing unit outputs the human readable format when indicated by user input. In other embodiments, the processing unit outputs the human readable format upon occurrence of a specified event such as completion of execution of the source code or detection of an error.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A system (100) comprising:
a storage medium (130) configured to store software instructions;
a processing unit (102) configured to execute the software instructions;
a bus (112);
an acknowledge device (162) coupled to the processing unit (102) via the bus (112); and
a logic analyzer (104) coupled to the bus (112) to sample debug messages written to the acknowledge device (162) by the processing unit (102) during execution of the software instructions;
wherein the acknowledge device (162) is configured to acknowledge the debug messages prior to processing the debug messages.

2. The system (100) of claim 1, wherein the acknowledge device (162) is configured to forward the debug messages to the storage medium (130) after acknowledging the debug messages.

3. The system (100) of claim 1, wherein the acknowledge device (162) is configured to not store the debug messages in the acknowledge device (162).

4. The system (100) of claim 1, further comprising a second processing unit (202) configured to extract a plurality of format strings from a source code file (216) and save the plurality of extracted format strings in a reference file (218), the processing unit (202) further configured to correlate at least one of the plurality of extracted format strings with the debug messages sampled by the logic analyzer (104).

5. The system (100) of claim 4, wherein the second processing unit (202) is configured to extract an index number from the source code file (216) for each of the plurality of format strings, wherein the processing unit (202) correlates the at least one of the plurality of format strings with the sampled debug messages based on the extracted index number.

6. A method (300) of logging debug messages, the method comprising:
transmitting a first debug message to an acknowledge device (302);
acknowledging receipt of the first debug message prior to other processing of the first debug message by the acknowledge device (304); and
transmitting a second debug message once receipt of the first debug message is acknowledged (302).

7. The method (300) of claim 6, wherein transmitting the second debug message comprises bursting the second debug message to the acknowledge device (302).

8. The method (300) of claim 6, further comprising capturing the first debug message with a logic analyzer (306).

9. The method (300) of claim 6, further comprising dropping the first debug message after acknowledging receipt of the first debug message (304).

10. The method (300) of claim 6, further comprising forwarding the first debug message to a memory device after acknowledging receipt of the first debug message (304).
